(19) Europäisches Patentamt
European Patent Office
Office européen des brevets

(11) **EP 4 394 499 A1**

(12) **EUROPEAN PATENT APPLICATION**

(43) Date of publication:
**03.07.2024 Bulletin 2024/27**

(21) Application number: **23218013.3**

(22) Date of filing: **19.12.2023**

(51) International Patent Classification (IPC):
*G03B 21/20* (2006.01)   *G02B 19/00* (2006.01)
*G02B 3/00* (2006.01)   *G02B 27/30* (2006.01)

(52) Cooperative Patent Classification (CPC):
**G02B 3/0037; G02B 19/0014; G02B 19/0066;**
**G02B 27/30; G03B 21/2013; G03B 21/2033;**
**G03B 21/208**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.12.2022 JP 2022211056**

(71) Applicant: **Ushio Denki Kabushiki Kaisha**
**Tokyo 100-8150 (JP)**

(72) Inventors:
• **MATSUSHIMA, Takeo**
**Chiyoda-ku, 100-8150 (JP)**
• **FUKUDA, Yusuke**
**Chiyoda-ku, 100-8150 (JP)**

(74) Representative: **Maiwald GmbH**
**Engineering**
**Elisenhof**
**Elisenstrasse 3**
**80335 München (DE)**

(54) **LIGHT SOURCE DEVICE**

(57) A light source device (1) includes a plurality of LEDs (3), a collimating optical system (5) disposed corresponding to the plurality of LEDs (3), a condensing optical system (7) that condenses light exiting from the collimating optical system (5), and a fly-eye integrator (10) into which the light exiting from the condensing optical system (7) is incident. Assuming that parallel light is defined as a virtual secondary light source (VS1), the parallel light being obtained from light traveling from a virtual primary light source (VS1) disposed at a back focus position of the condensing optical system (7) toward the condensing optical system (7) with a maximum effective acceptance angle ($\theta L$) of the fly-eye integrator (10) as a divergence angle and then passing through the condensing optical system (7), the virtual secondary light source (VS2) has a width that substantially coincides with a width of a secondary light source determined according to a shape of a light exit surface of the collimating optical system (5).

Fig. 2

EP 4 394 499 A1

**Description**

BACKGROUND OF THE INVENTION

Field of the Invention

The present invention relates to a light source device, particularly to a light source device that condenses and utilizes light emitted from a plurality of light-emitting diodes (LEDs).

Description of the Related Art

Conventionally, one of the present inventors has developed a light source device that collimates light from a plurality of LEDs arranged in an array and then condenses the light on a light incident surface of a fly-eye integrator by a condensing optical system.

PRIOR ART DOCUMENT

Patent Document

Patent Document 1: JP-A-2014-003086

SUMMARY OF THE INVENTION

In the fly-eye integrator, a range of the effective acceptance angle is determined by the shape of an element lens. That is, light incident on a light incident surface of the fly-eye integrator at an incident angle larger than an angle corresponding to the maximum value of the effective acceptance angle (a maximum effective acceptance angle) cannot be accepted into the fly-eye integrator. In this case, the light from the plurality of LEDs cannot be effectively used, and the utilization efficiency of the light decreases.

In order to guide all the light from the plurality of LEDs into the fly-eye integrator, it seems that it is only necessary to cause all the light to be incident on the light incident surface of the fly-eye integrator at an angle smaller than the maximum effective acceptance angle of the fly-eye integrator. However, in order to achieve such a state as a light source device, the incident angle of all the light on the light incident surface of the fly-eye integrator becomes significantly smaller than the maximum effective acceptance angle of the fly-eye integrator, and the amount of light accepted into the fly-eye integrator decreases.

Given the above problems, an object of the present invention is to provide a light source device that can increase the amount of light acceptable into a fly-eye integrator while increasing the utilization efficiency of light emitted from a plurality of LEDs.

A light source device according to the present invention includes:

a plurality of LEDs;
a collimating optical system that is disposed corresponding to the plurality of LEDs and on which light exiting from the plurality of LEDs is incident;
a condensing optical system that condenses light exiting from the collimating optical system; and
a fly-eye integrator into which light exiting from the condensing optical system is incident,
in which assuming that a virtual primary light source is arranged at a back focus position of the condensing optical system, and parallel light is defined as a virtual secondary light source, the parallel light being obtained from light traveling from the virtual primary light source toward the condensing optical system with a maximum effective acceptance angle of the fly-eye integrator as a divergence angle and then passing through the condensing optical system, the virtual secondary light source has a width that substantially coincides with a width of a secondary light source determined according to a shape of a light exit surface of the collimating optical system.

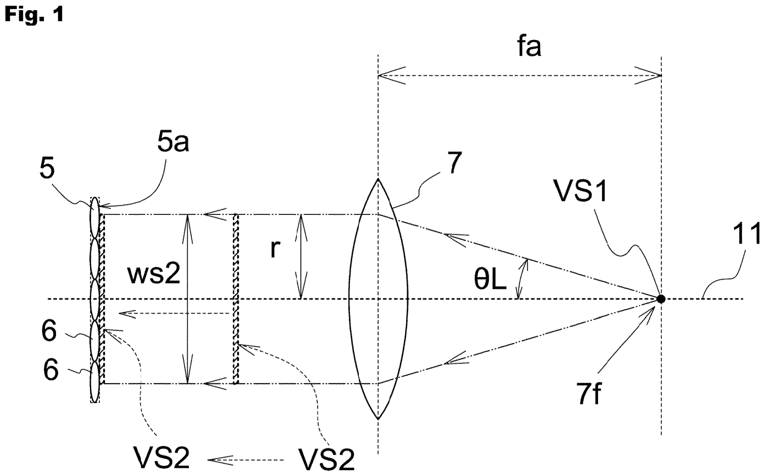

The virtual secondary light source is described with reference to Fig. 1. Fig. 1 illustrates a collimating optical system 5 including lens elements 6, 6, ..., and a condensing optical system 7 which condenses light exiting from the collimating optical system 5. The light exiting from the collimating optical system 5 is condensed on a focal point (back focus) 7f by the condensing optical system 7. In Fig. 1, an ideal focal length of the condensing optical system 7 is denoted by fa.

Fig. 1 illustrates a state in which a virtual primary light source VS1 is disposed at the focal point (back focus) 7f of the condensing optical system 7. The virtual primary light source VS1 has a divergence angle corresponding to a maximum effective acceptance angle θL of the fly-eye integrator and emits light toward the condensing optical system 7. When the light passes through the condensing optical system 7, the light is converted into parallel light and travels toward the collimating optical system 5. In Fig. 1, a virtual light source that emits the parallel light is referred to as a virtual secondary light source VS2.

Because the virtual secondary light source VS2 is a virtual light source that emits parallel light from the condensing optical system 7 side toward the collimating optical system 5 side, the virtual secondary light source VS2 can be optionally moved in a direction parallel to an optical axis 11 at a position between the condensing optical system 7 and the collimating optical system 5. Fig. 1 also illustrates a case where the virtual secondary light source VS2 is set at a position of a light exit surface 5a of the collimating optical system 5.

The maximum effective acceptance angle θL of the fly-eye integrator is a value determined by the element shape of the fly-eye integrator. That is, when the fly-eye integrator included in the light source device is specified, the maximum effective acceptance angle θL of the fly-eye integrator is also specified.

According to Fig. 1, the virtual secondary light source VS2 can be derived as ws2 = 2 × r = 2 × (fa × tanθL), where ws2 is a width in a planar direction orthogonal to the optical axis 11, and r is a distance from the optical axis 11 to an outer edge of the virtual secondary light source VS2. That is, the dimension of the virtual secondary light source VS2 can be derived by the ideal focal length fa of the condensing optical system 7 and the maximum effective acceptance angle $\theta_L$ of the fly-eye integrator.

On the other hand, the actual light emitted from the plurality of LEDs is converted into parallel light through the collimating optical system 5 and then travels toward the condensing optical system 7. The parallel light is not virtual light from the virtual light source but the actual light. The actual width of the parallel light is determined according to the shape of the light exit surface 5a of the collimating optical system 5.

When viewed from the condensing optical system 7 side, the light exit surface 5a of the collimating optical system 5 forms an actual secondary light source. In other words, the width of the secondary light source is determined according to the shape of the light exit surface 5a of the collimating optical system 5.

As described in the above configuration, when the width of the secondary light source determined according to the shape of the light exit surface 5a of the collimating optical system 5 substantially coincides with the width of the virtual secondary light source VS2, the actual light exiting from the light exit surface 5a of the collimating optical system 5 travels in the opposite direction to the virtual light from the virtual primary light source VS1 illustrated in Fig. 1. For the sake of simplicity, assuming a case where the light incident surface of the fly-eye integrator is disposed at the focal point (back focus) 7f of the condensing optical system 7, the maximum angle (maximum incident angle) when the actual light exiting from the light exit surface 5a of the collimating optical system 5 and passing through the condensing optical system 7 is incident on the light incident surface of the fly-eye integrator substantially coincides with the maximum effective acceptance angle $\theta_L$.

That is, according to the configuration of the light source device described above, a range of the incident angle when a light beam bundle of the light exiting from the plurality of LEDs through the collimating optical system is incident on the light incident surface of the fly-eye integrator substantially coincides with an angular range that can be accepted on the fly-eye integrator side. Therefore, it becomes possible to accept a large amount of light into the fly-eye integrator while the ratio of the amount of light accepted into the fly-eye integrator with respect to the amount of light emitted by the plurality of LEDs is increased. Details will be described later in the section "Detailed Description of the Preferred Embodiments".

The fact that the width of the secondary light source determined according to the shape of the light exit surface 5a of the collimating optical system 5 substantially coincides with the width of the virtual secondary light source VS2 is expressed by the following three aspects. In other words, if the above fact can be expressed by at least one of the following three aspects, it is evaluated that the width of the secondary light source and the width of the virtual secondary light source substantially coincide with each other.

Note that, according to the above description, the fact that the width of the secondary light source substantially coincides with the width of the virtual secondary light source means, in other words, that the range of the incident angle of the light exiting from the condensing optical system with respect to the virtual surface substantially coincides with the range of the effective acceptance angle determined by the element shape (shape of the lens element) of the fly-eye integrator.

A first aspect corresponds to a case in which:

in a case where an inner side of a convex polygon or a closed curved surface formed by virtually connecting an outer edge of the light exit surface of the collimating optical system with a straight line or an envelope is set as a secondary light source, and the virtual secondary light source is set at a position of the light exit surface of the collimating optical system,

assuming that a length of a line segment that passes through a center of the virtual secondary light source from a first point on an outer edge of the virtual secondary light source and reaches a second point different from the first point on the outer edge of the virtual secondary light source is defined as D,
the outer edge of the secondary light source is positioned between a first reference boundary offset by 0.1D from the outer edge of the virtual secondary light source toward a side approaching the center and a second reference boundary offset by 0.1D from the outer edge of the virtual secondary light source toward a side separating from the center.

A second aspect corresponds to a case in which:

in a case where the light exit surface of the collimating optical system is a secondary light source, and the virtual secondary light source is set at a position of the light exit surface of the collimating optical system, the light source device satisfies

$$0 < S3b/S1 < 0.4 \text{ and } 0 < S2b/S1 < 0.4$$

where:

S1 is an area of an acceptable region that is an occupied region of the virtual secondary light source;
S2b is an area of an unused region that is a region sandwiched between the outer edge of the secondary light source and the outer edge of the virtual secondary light source on an inner side of the outer edge of the virtual secondary light source when the virtual secondary light source is projected onto the secondary light source; and
S3b is an area of an unacceptable region that is a region sandwiched between the outer edge of the secondary light source and the outer edge of the virtual secondary light source on an outer side of the outer edge of the virtual secondary light source when the virtual secondary light source is projected onto the secondary light source.

A third aspect corresponds to a case in which:

in a case where an inner side of a circumscribed circle of the light exit surface of the collimating optical system is a secondary light source, and the virtual secondary light source is set at a position of the light exit surface of the collimating optical system, the light source device satisfies

$$|S3a - S2a|/S1 \le 0.17,$$

where:

S1 is an area of an acceptable region that is an occupied region of the virtual secondary light source;
S2a is an area of an unused region that is a region sandwiched between the outer edge of the secondary light source and the outer edge of the virtual secondary light source on an inner side of the outer edge of the virtual secondary light source when the virtual secondary light source is projected onto the secondary light source; and
S3a is an area of an unacceptable region that is a region sandwiched between the outer edge of the secondary light source and the outer edge of the virtual secondary light source on the outer side of the outer edge of the virtual secondary light source when the virtual secondary light source is projected onto the secondary light source.

The light exit surface of the collimating optical system may be disposed in a range near the front focus of the condensing optical system. The "range near the front focus" will be described later in the "Detailed Description of the Invention".
The lens element constituting the fly-eye integrator may have any shape but typically has a circular shape, a quadrangular shape, or a hexagonal shape. According to the above configuration, particularly even in a case where the lens element has a quadrangular shape or a hexagonal shape, it is possible to increase the amount of light accepted into the fly-eye integrator while the utilization efficiency of the light emitted from the plurality of LEDs is increased.
According to the light source device of the present invention, it is possible to increase the amount of light that can be accepted into the fly-eye integrator while the utilization efficiency of the light emitted from the plurality of LEDs is increased.

BRIEF DESCRIPTION OF THE DRAWINGS

Fig. 1 is a view for describing a virtual secondary light source;

Fig. 2 is a schematic view showing a configuration of a light source device according to one embodiment of the present invention;

Fig. 3 is a view for describing a traveling mode of light emitted from different light-emitting positions on an LED;

Fig. 4 is a view for describing a traveling mode of light traveling parallel to an optical axis from a light exit surface of a collimating optical system regarded as a secondary light source;

Fig. 5 is a view for describing a traveling mode of light traveling non-parallel to the optical axis from the light exit surface of the collimating optical system regarded as the secondary light source;

Fig. 6 is a view for describing a traveling mode of light traveling in parallel to an optical axis from a secondary light source wider than the secondary light source in Fig. 4;

Fig. 7 is an example of a schematic view of the collimating optical system as viewed from the light exit surface side;

Fig. 8 is a view schematically illustrating a secondary light source in a state corresponding to Fig. 7;

Fig. 9 is a drawing of the secondary light source shown in Fig. 8, with only the outer edges extracted;

Fig. 10 is a view schematically illustrating a traveling mode of light incident on a fly-eye integrator;

Fig. 11 is a view schematically illustrating a traveling mode of light incident on a fly-eye integrator at an incident angle larger than a maximum effective acceptance angle;

Fig. 12 is a schematic view for describing an acceptance margin of the fly-eye integrator in a case where the width of the secondary light source is designed to be smaller than the width of the virtual secondary light source;

Fig. 13 is a schematic view for describing that there is light that is not accepted into the fly-eye integrator in a case where the width of the secondary light source is designed to be larger than the width of the virtual secondary light source;

Fig. 14 is a view for describing a region that can be taken by an outer edge of a circular virtual secondary light source in a case where the virtual secondary light source is set at a position of the light exit surface of the collimating optical system;

Fig. 15 is a view for describing a region that can be taken by an outer edge of a rectangular virtual secondary light source in a case where the virtual secondary light source is set at a position of the light exit surface of the collimating optical system;

Fig. 16 is a view schematically illustrating a mode in which independently arranged light sources and lenses are disposed at positions separated from a region where a plurality of lens elements are arranged close to each other;

Fig. 17 is a view in which the light exit surface of the secondary light source is superimposed on the virtual secondary light source;

Fig. 18 is a view in which a region where a secondary light source region exists inside the virtual secondary light source and a region where the secondary light source region exists outside the virtual secondary light source are added to the view illustrated in Fig. 17;

Fig. 19 is a view in which the light exit surface of the secondary light source and a region of the virtual secondary light source are superimposed on each other in a case where an outer edge of the secondary light source is assumed to be circular;

Fig. 20 is a view obtained by extracting an element corresponding to an upper right quarter portion of a figure illustrated in Fig. 19;

Fig. 21 is a view schematically illustrating a traveling mode of light beams by extracting a collimating optical system 5 and a condensing optical system 7 from Fig. 2;

Fig. 22 is a view in which a traveling mode of the light beam when the collimating optical system 5 is moved in the Z direction from a state in Fig. 21 is superimposed on the traveling mode of the light beam in Fig. 21;

Fig. 23 is a partially enlarged view of Fig. 22; and

Fig. 24 is a view schematically illustrating a traveling mode of light beams by extracting the collimating optical system 5 and the condensing optical system 7 from Fig. 2.

DETAILED DESCRIPTION OF THE PREFERRED EMBODIMENTS

An embodiment of a light source device according to the present invention is described with reference to the drawings.

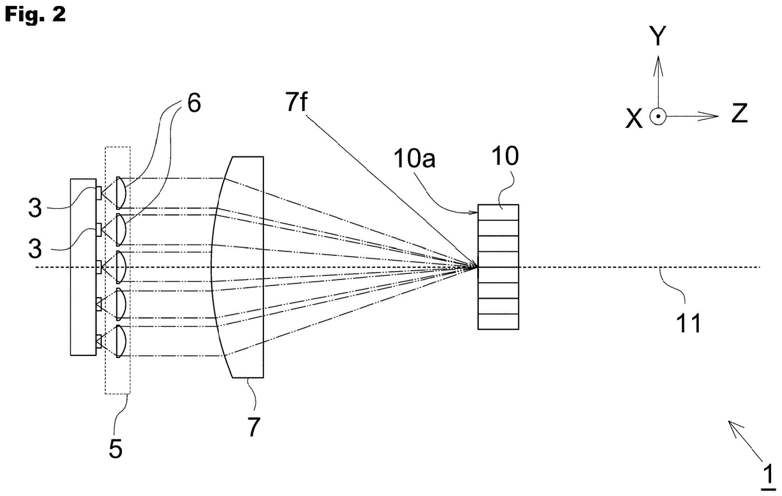

Fig. 2 is a view schematically illustrating a light source device 1 of the present embodiment. The light source device 1 includes a plurality of LEDs 3, 3, ..., a collimating optical system 5, a condensing optical system 7, and a fly-eye integrator 10. Note that, in the following description, there is a case where an X-Y-Z coordinate system in which a direction parallel to the optical axis 11 is a Z direction and a plane orthogonal to the Z direction is an X-Y plane is referred to.

The collimating optical system 5 includes lens elements 6, 6, ... disposed corresponding to the plurality of LEDs 3, 3, ..., and collimates and causes light to be emitted from the plurality of LEDs 3, 3, .... The light exiting from the collimating optical system 5 is condensed by the condensing optical system 7 and guided to a light incident surface 10a of the fly-eye integrator 10. The fly-eye integrator 10 includes a plurality of lens elements, and each lens element has a circular shape, a quadrangular shape, or a hexagonal shape.

In the present embodiment, a light exit surface (more specifically, a light exit surface of each of the lens elements 6, 6, ...) of the collimating optical system 5 is disposed at the front focus position of the condensing optical system 7. The light incident surface 10a of the fly-eye integrator 10 is disposed at the back focus position of the condensing optical system 7.

With this optical system, the light emitted from the plurality of LEDs 3, 3, ... is condensed and guided to the fly-eye integrator 10, and the fly-eye integrator 10 illuminates light with uniform illuminance.

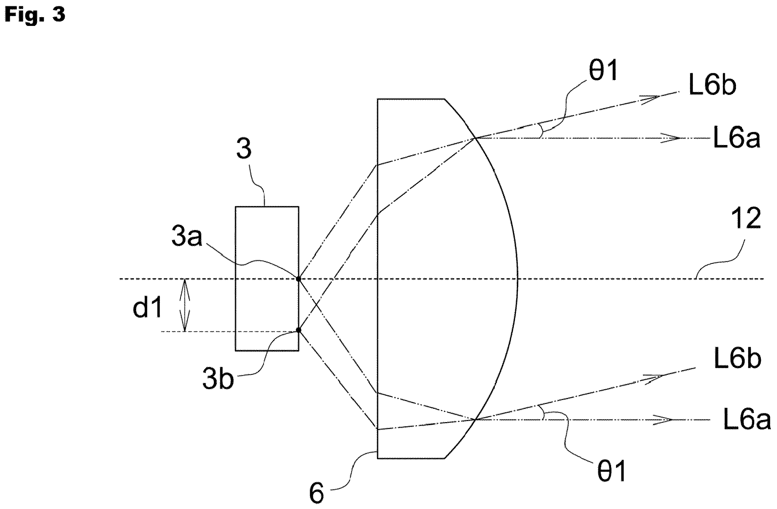

Incidentally, the traveling direction of the light emitted from the LEDs 3 and passing through the lens elements 6 of the collimating optical system 5 disposed corresponding to the LEDs 3 varies depending on the light-emitting position of the LEDs 3. Fig. 3 is a schematic view for describing this point.

From the viewpoint of accepting most of the light emitted from the LED 3 and generating the collimated light, the lens element 6 is arranged such that the center position of the lens element 6 corresponds to the center position of the light-emitting surface of the LED 3 with respect to the direction of an optical axis 12. At this time, light L6a emitted from a light-emitting point 3a positioned on the optical axis 12 passes through the lens element 6 and travels in a direction parallel to the optical axis 12. On the other hand, light L6b emitted from a light-emitting point 3b at a position shifted by d1 from the light-emitting point 3a with respect to the direction orthogonal to the optical axis 12 travels with an angle $\theta 1$ corresponding to the distance d1 with respect to the optical axis 12.

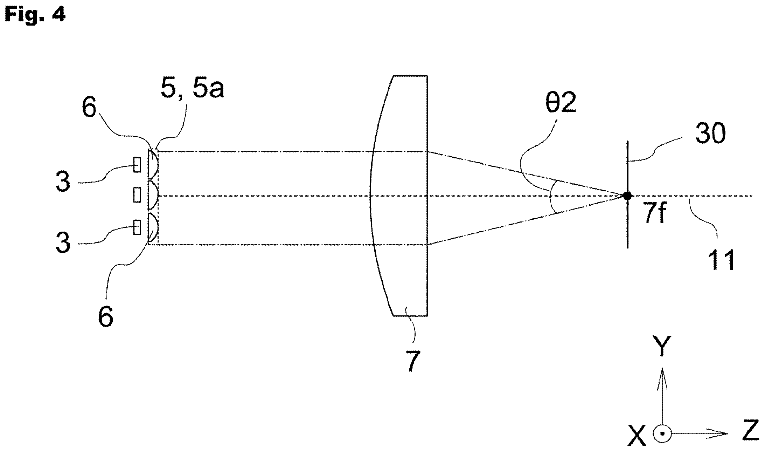

Because all the light emitted from the LEDs 3, 3, ... is caused to exit through the collimating optical system 5, the light exit surface 5a of the collimating optical system 5 can be regarded as a secondary light source (see Fig. 4). Therefore, in the following description, reference numeral 5a is also appropriately referred to for the secondary light source.

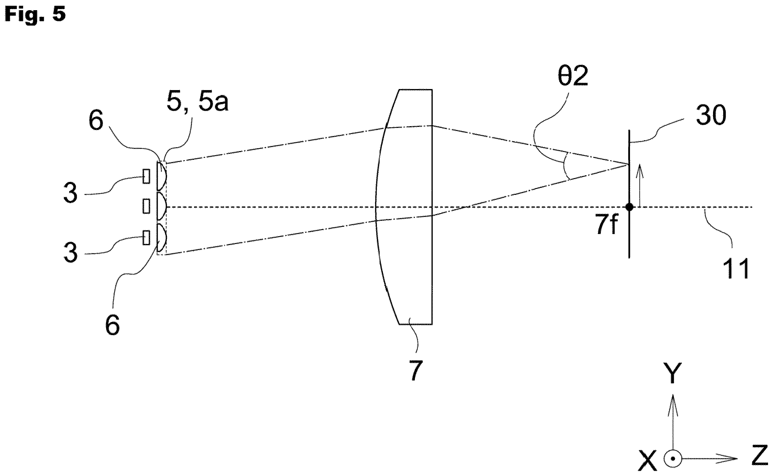

The light exiting from the secondary light source 5a and traveling parallel to the optical axis 11 is condensed on the back focus 7f of the condensing optical system 7 as illustrated in Fig. 4. Further, the light exiting from the secondary light source 5a and traveling non-parallel to the optical axis 11 is condensed on a position shifted from the back focus 7f of the condensing optical system 7 as illustrated in Fig. 5. In either case, the light is incident on a plane 30 (X-Y plane) including the back focus 7f and orthogonal to the optical axis 11 at the same incident angle $\theta 2$.

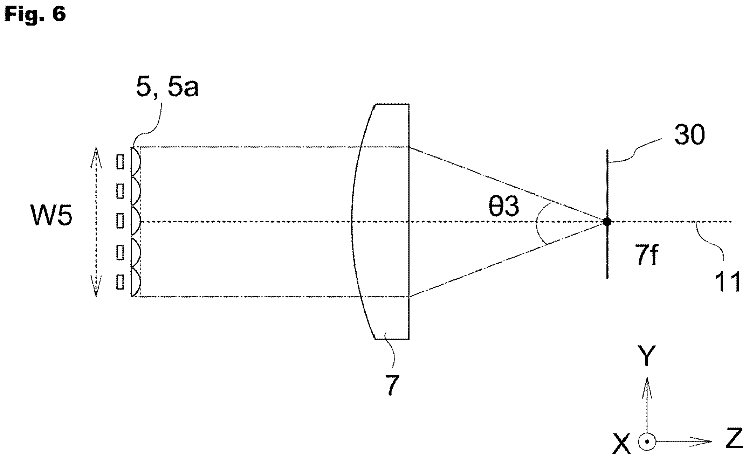

The incident angle at which the light exiting from the secondary light source 5a is incident on the plane 30 depends on the width of the secondary light source 5a. Fig. 6 corresponds to a case where a width W5 of the secondary light source 5a is increased as compared with the width in Fig. 4. The width W5 herein corresponds to a length on the X-Y plane. At this time, an incident angle $\theta 3$ when the light exiting from the secondary light source 5a is incident on the plane 30 is larger than the incident angle $\theta 2$ in Figs. 4 to 5.

This means that, when the plane 30 is replaced with the light incident surface 10a of the fly-eye integrator 10, an incident angle of the light incident on the light incident surface 10a of the fly-eye integrator 10 is determined by the width of the secondary light source 5a, that is, the arrangement mode of the plurality of lens elements 6, 6, ... constituting the collimating optical system 5.

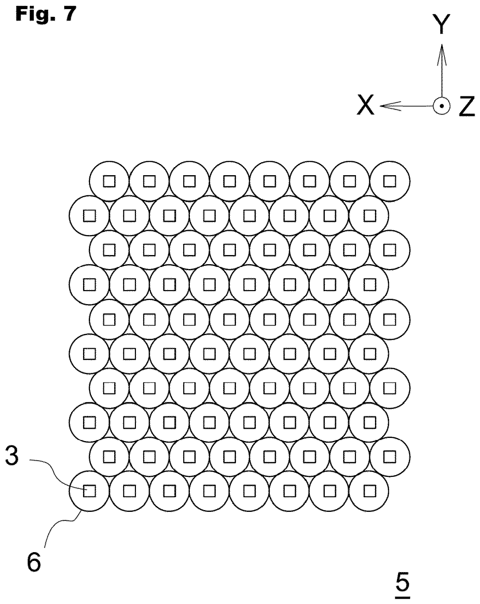

Fig. 7 is an example of a schematic view of the collimating optical system 5 as viewed from the light exit surface side, that is, as viewed in the -Z direction in Fig. 2. Note that Fig. 7 also illustrates the LEDs 3 arranged in the depth direction of the paper surface than the collimating optical system 5.

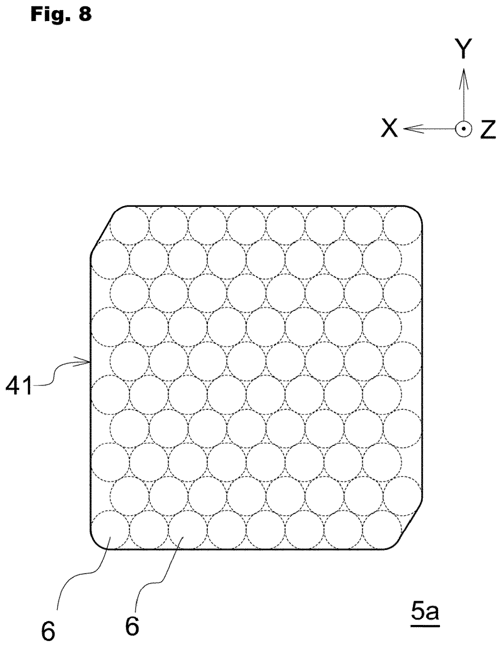

The light exits from the collimating optical system 5 displayed in Fig. 7 toward the +Z direction (front direction with respect to the paper surface). That is, as described above, the light exit surface of the collimating optical system 5 can be regarded as the secondary light source 5a. Fig. 8 is a view schematically illustrating the secondary light source 5a in a state corresponding to Fig. 7.

Note that, in Fig. 8, for convenience, the inner side of a closed figure (convex polygon or closed curved surface) drawn by virtually connecting the outer edges of the light exit surfaces of the respective lens elements 6 constituting the collimating optical system 5 with a straight line or an envelope is indicated as the secondary light source 5a. A region surrounded by an outer edge 41 of the closed figure can be regarded as the secondary light source 5a.

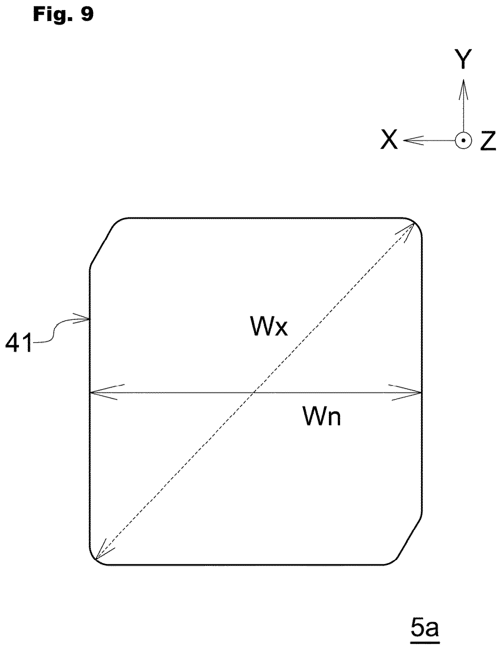

Fig. 9 is a view in which only the outer edge 41 of the secondary light source 5a simulated in Fig. 8 is drawn. As illustrated in Fig. 9, a region having a minimum width Wn and a region having a maximum width Wx exist on the light exit surface of the secondary light source 5a. As described above, the dimension of the width of the light source on the X-Y plane affects the incident angle of the light incident on the plane 30 including the back focus 7f of the condensing optical system 7. In other words, among the secondary light source 5a, the light exiting from the region corresponding to the maximum width Wx, traveling through the condensing optical system 7, and incident on the plane 30 has an incident angle that is larger than an incident angle of the light exiting from the region corresponding to the minimum width Wn.

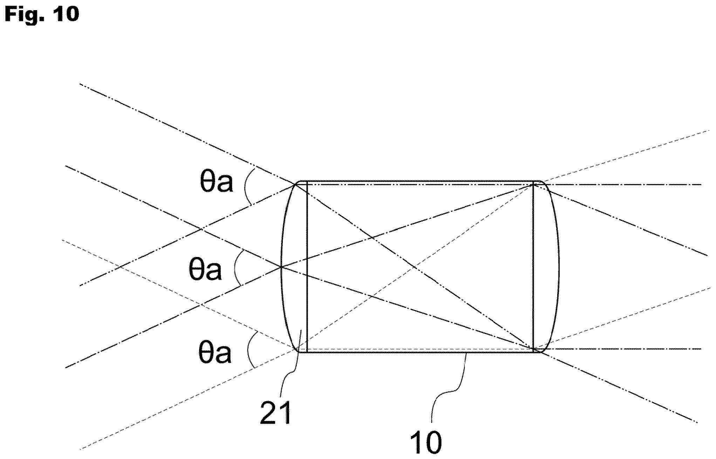

The light exiting from the secondary light source 5a is incident on the light incident surface 10a of the fly-eye integrator 10. As described above, the light exiting from the same region of the light source is incident at the same incident angle. That is, as schematically illustrated in Fig. 10, light exiting from a portion having a certain width in the secondary light source 5a is incident on a lens element 21 constituting the fly-eye integrator 10 at the same incident angle θa.

As described above, the light exiting from the region where the light source has the wide width is incident on the incident surface at a relatively large incident angle. However, due to the characteristics of the fly-eye integrator 10, the shape of the lens element 21 limits a range of incident angles at which the light can be accepted into the fly-eye integrator. In the present specification, the incident angle of the light that can be guided to the light exit surface side of the fly-eye integrator 10 among the light incident from the light incident surface 10a side of the fly-eye integrator 10 is referred to as an "effective acceptance angle". The effective acceptance angle is the angle within the range of less than the maximum effective acceptance angle.

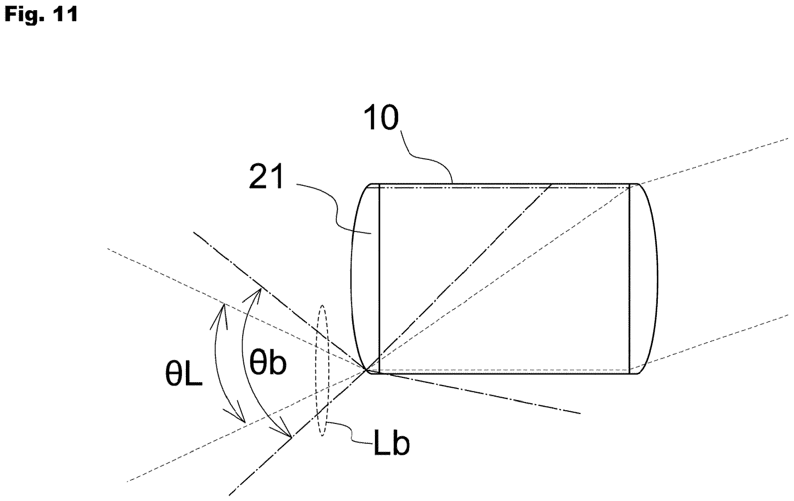

Fig. 11 is a view illustrating a situation in a case where certain light Lb is incident on the lens element 21 constituting the fly-eye integrator 10 at an incident angle θb larger than the maximum effective acceptance angle θL. A part of the light Lb cannot be accepted into the fly-eye integrator 10 or is accepted into the fly-eye integrator 10 but exits from the side without reaching the light exit surface. In this case, a part of the light incident on the fly-eye integrator 10 cannot be incident on the optical system at the subsequent stage of the fly-eye integrator 10. That is, a part of the light emitted from the plurality of LEDs 3, 3, ... disposed as the light source cannot be used, which means that the utilization efficiency of the light is not improved.

In order to effectively take all the light exiting from the secondary light source 5a into the fly-eye integrator 10, it seems to be sufficient to simply design the width (Wx, Wn) of the secondary light source 5a described with reference to Fig. 9 to be smaller than the light source width corresponding to the maximum effective acceptance angle θL of the fly-eye integrator 10. However, in this case, although there is a margin (angle margin) of light that can be accepted into the fly-eye integrator 10, there is a region that is not actually used.

Note that, as described above with reference to Fig. 1, the light source width corresponding to the maximum effective acceptance angle θL of the fly-eye integrator 10 corresponds to the width of the virtual secondary light source VS2. In other words, in a case where the width (Wx, Wn) of the secondary light source 5a described with reference to Fig. 9 is designed to be smaller than the width of the virtual secondary light source VS2, it means that light is not incident on the margin region although there is still a margin for accepting the light on the fly-eye integrator 10 side.

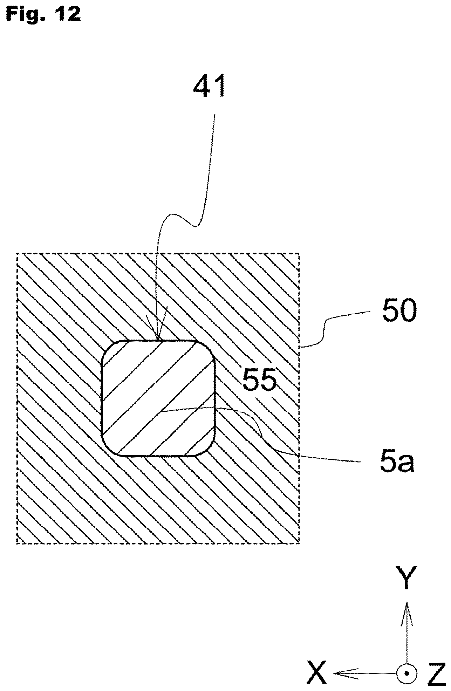

Fig. 12 is a schematic view for describing the acceptance margin of the fly-eye integrator 10 in a case where the width (Wx, Wn) of the secondary light source 5a is designed to be significantly smaller than the light source width corresponding to the maximum effective acceptance angle θL of the fly-eye integrator 10, that is, the width of the virtual secondary light source VS2. In Fig. 12, the inner side of a region 50 corresponds to a virtual secondary light source that can cause the light to enter at an incident angle in the entire range of the effective acceptance angle θL or less of the fly-eye integrator 10. That is, the region 50 is an occupied region of the virtual secondary light source and corresponds to a region that can be accepted into the fly-eye integrator 10. Hereinafter, the region 50 is referred to as an "acceptable region 50".

A region 55 (right-downward hatched region in Fig. 12) on the inner side of the acceptable region 50 and the outer side of the occupied region of the secondary light source 5a is a region that can accept the light into the fly-eye integrator 10 if the light source is disposed in the region. In other words, if the secondary light source is additionally disposed in this region 55, the amount of light that can be accepted into the fly-eye integrator 10 is increased, which can improve the output of the light source device 1.

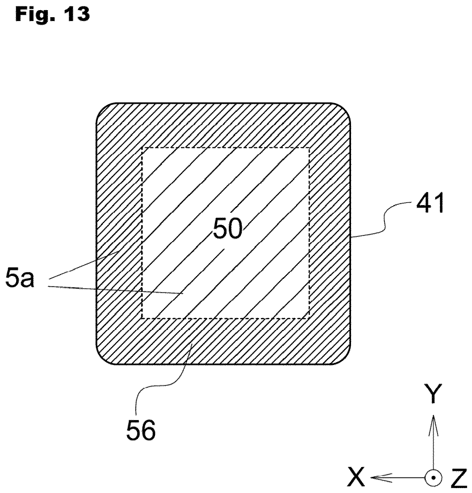

Conversely, in a case where the width of the secondary light source 5a is designed such that the occupied region of the secondary light source 5a is larger than the acceptable region 50, as illustrated in Fig. 13, the light from a region 56 (right-upward fine hatched region in Fig. 13) on the outer side of the acceptable region 50 and the inner side of the occupied region of the secondary light source 5a cannot be accepted into the fly-eye integrator 10. In this case, as described above with reference to Fig. 11, a part of the light emitted from the plurality of LEDs 3, 3, ... cannot be used, and the utilization efficiency of the light cannot be improved.

In the light source device 1 of the present embodiment, the acceptable region 50 defined by the maximum effective acceptance angle θL of the fly-eye integrator 10 is made to substantially coincide with the occupied region (region surrounded by the outer edge 41) of the secondary light source 5a. In other words, based on the content described above with reference to Fig. 1, in the light source device 1 of the present embodiment, the region (acceptable region 50) defined by the width of the virtual secondary light source VS2 is made to substantially coincide with the occupied region of the secondary light source 5a determined according to the shape of the light exit surface 5a of the collimating optical system 5. As a result, the size of the secondary light source 5a can be expanded as much as possible within the angular range at which the light can be accepted into the fly-eye integrator 10. In other words, the number of the plurality of LEDs 3, 3, ... disposed or the light-emitting area can be expanded. This can realize the high-output light source device 1 without reducing the utilization efficiency of light.

Several methods can be adopted as a design method for setting the range of the incident angle of light exiting from the secondary light source 5a and incident on the light incident surface 10a of the fly-eye integrator 10 to the entire range of the effective acceptance angle of the fly-eye integrator 10. In other words, this design method is a method of making the region (acceptable region 50) defined by the width of the virtual secondary light source VS2 substantially coincide with the occupied region of the secondary light source 5a determined according to the shape of the light exit surface 5a of the collimating optical system 5. Hereinbelow, the respective methods are described.

(First Aspect)

As described above with reference to Figs. 12 to 13, the acceptable region 50 defined by the maximum effective acceptance angle θL of the fly-eye integrator 10, that is, the acceptable region 50 defined by the width of the virtual secondary light source VS2 is determined by the shapes and arrangement modes of the lens elements 21, 21, ... constituting the fly-eye integrator 10.

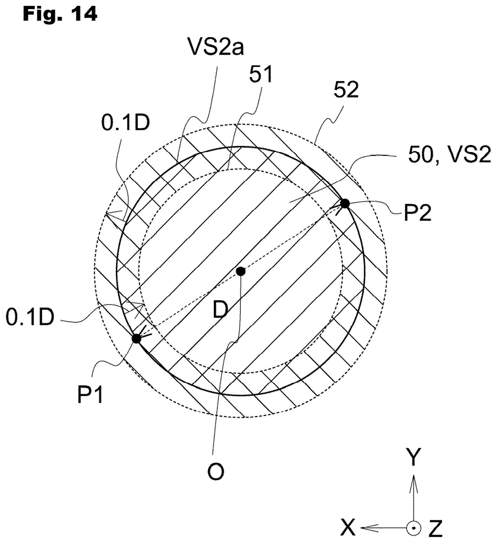

Fig. 14 is a diagram for describing the shape of the secondary light source 5a according to the first aspect. In Fig. 14, a case where the virtual secondary light source VS2 is circular is assumed for simplicity of description. In short, a case is assumed in which the light incident surface 10a of the fly-eye integrator 10 is circular, and virtual light exiting from the circular virtual primary light source VS1 (see Fig. 1) passes through the condensing optical system 7 and travels toward the collimating optical system 5 to form the circular virtual secondary light source VS2 as viewed in the optical axis 11 direction.

Fig. 14 is a diagram for describing a region that can be taken by the outer edge of the light exit surface 5a of the collimating optical system 5, in other words, the outer edge of the secondary light source 5a, in a case where such a circular virtual secondary light source VS2 is set at the position of the light exit surface 5a of the collimating optical system 5.

In Fig. 14, the virtual secondary light source VS2 is indicated by a right-upward hatched region. In other words, the right-upward hatched region corresponds to the acceptable region 50. In Fig. 14, a region indicated by a right-downward hatched region is a region that can be taken by the outer edge of the secondary light source 5a.

A length of a line segment from a first point P1 on an outer edge VS2a of the virtual secondary light source VS2, passing through a center O of the virtual secondary light source VS2, and reaching a second point P2 of the outer edge VS2a of the virtual secondary light source VS2 is denoted as D. The secondary light source 5a, that is, the light exit surface 5a of the collimating optical system 5, is set so that its outer edge is positioned in a region (right-downward hatched region) sandwiched between a first reference boundary 51 and a second reference boundary 52. The first reference boundary 51 is obtained by offsetting the outer edge VS2a of the virtual secondary light source VS2 by $0.1 \times D$ to the side (inner side) approaching the center O. The second reference boundary 52 is obtained by offsetting the outer edge VS2a of the virtual secondary light source VS2 by $0.1 \times D$ to the side (outer side) separating from the center O.

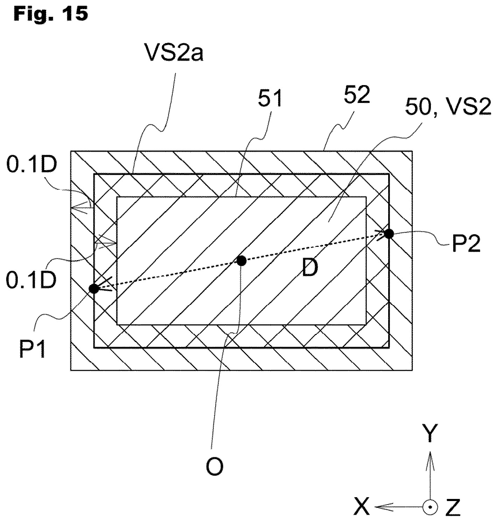

Fig. 15 illustrates, in a similar manner to Fig. 14, a case where the virtual secondary light source VS2 has a rectangular shape. That is, Fig. 15 is a view for describing a region that can be taken by the outer edge of the rectangular virtual secondary light source 5a in a case where the rectangular virtual secondary light source VS2 is set at a position of the light exit surface 5a of the collimating optical system 5.

Also in Fig. 15, similarly to Fig. 14, the virtual secondary light source VS2 is indicated by a right-upward hatched region, and this region corresponds to the acceptable region 50. In Fig. 15, a region indicated by a right-downward hatched region is a region that can be taken by the outer edge of the secondary light source 5a.

Also in the case of the shape illustrated in Fig. 15, the secondary light source 5a, that is, the light exit surface 5a of the collimating optical system 5, is set so that its outer edge is positioned in a region (right-downward hatched region) sandwiched between the first reference boundary 51 and the second reference boundary 52. The first reference boundary 51 is obtained by offsetting the outer edge VS2a of the virtual secondary light source VS2 by $0.1 \times D$ to the side approaching the center O. The second reference boundary 52 is obtained by offsetting the outer edge VS2a of the virtual secondary light source VS2 by $0.1 \times D$ to the side separating from the center O.

The fact that the outer edge of the light exit surface 5a of the collimating optical system 5 is positioned in the right-downward hatched region illustrated in Fig. 14 or 15 means that the width of the secondary light source 5a determined according to the shape of the light exit surface 5a of the collimating optical system 5 substantially coincides with the width of the virtual secondary light source VS2. In other words, this means that the acceptable region corresponding to the entire range of the effective acceptance angle of the fly-eye integrator 10 and the occupied region of the secondary light source 5a have shapes that are almost approximate to each other.

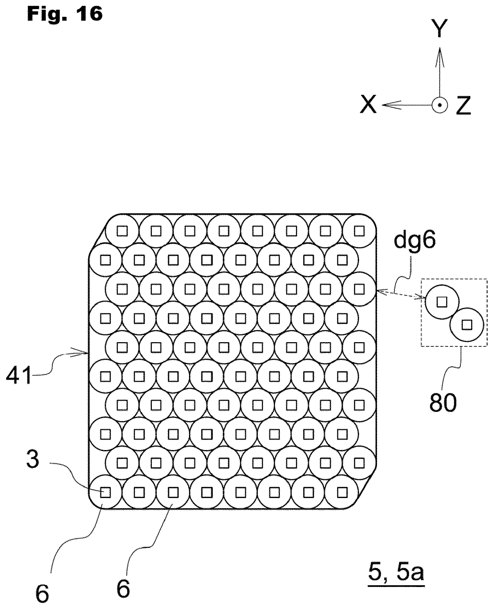

Note that, as described above with reference to Fig. 8, the outer edge 41 of the occupied region of the secondary light source 5a can be set by virtually connecting the outer edges of the light exit surfaces of the lens elements 6 constituting the collimating optical system 5 with a straight line or an envelope. However, as illustrated in Fig. 16, it is also assumed that independently arranged light sources and lenses (hereinafter, referred to as an "independent secondary light source 80") are disposed at positions separated from the region where the plurality of lens elements 6, 6, ... are arranged close to each other. In such a case, if a separation distance dg6 with respect to the lens elements 6 that are disposed away is a distance equal to or longer than a radius of the lens element 6, and the number of light sources included in the independent secondary light source 80 is 10% or less of the number of light sources specified by surrounding the outer edge of the light exit surface of each lens element 6, the independent secondary light source 80 may be ignored.

(Second Aspect)

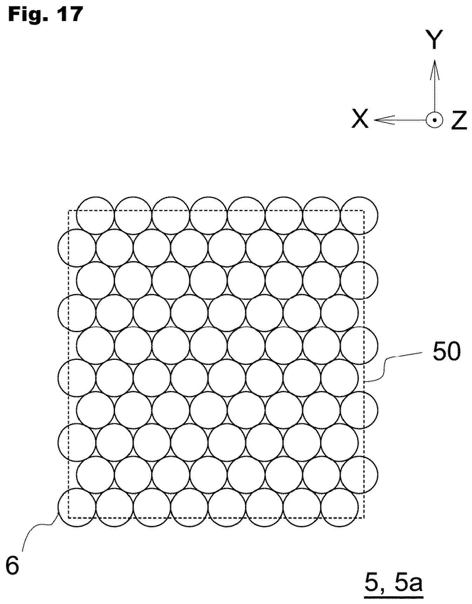

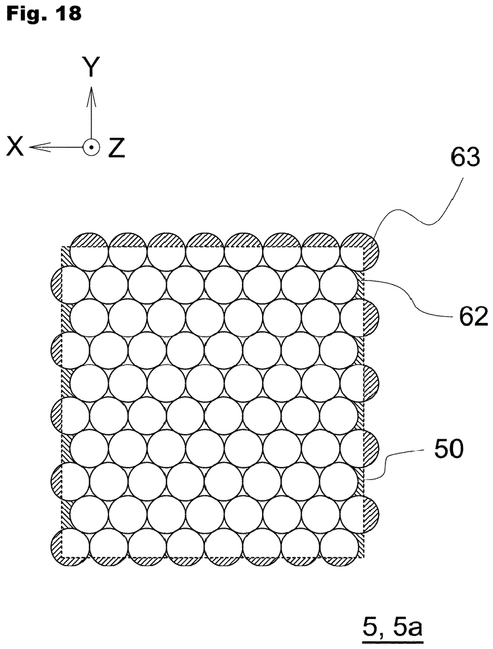

Figs. 17 and 18 are views in which the acceptable region 50 defined by the maximum effective acceptance angle $\theta L$ of the fly-eye integrator 10, that is, the acceptable region 50 defined by the width of the virtual secondary light source VS2 is superimposed on the light exit surface of the secondary light source 5a. As illustrated in Fig. 18, a region 62 positioned on the inner side of the acceptable region 50 and the outer side of the outer edge of the light exit surface of the secondary light source 5a is a region (unused region) that can accept light into the fly-eye integrator 10 even if the secondary light source is additionally disposed at this position. The unused region 62 in Fig. 18 is indicated by hatching the region in Fig. 17 in the right-downward direction.

As illustrated in Fig. 18, a region 63 being a part of the light exit surface of the secondary light source 5a and positioned on the outer side of the acceptable region 50 is a region (unacceptable region) that cannot effectively accept the light exiting from this region 63 into the fly-eye integrator 10. The unacceptable region 63 in Fig. 18 is indicated by hatching the region in Fig. 17 in the right-upward direction.

Here, assuming that the area of the acceptable region 50 is S1, the area of the unused region 62 is S2b, and the area of the unacceptable region 63 is S3b, by setting the dimension of the shape of the secondary light source 5a so as to satisfy

$$0 < S3b/S1 < 0.4 \text{ and } 0 < S2b/S1 < 0.4 \qquad (1),$$

the width of the secondary light source 5a and the width of the virtual secondary light source VS2 substantially coincide with each other. In other words, the acceptable region corresponding to the entire range of the effective acceptance angle of the fly-eye integrator 10 and the occupied region of the secondary light source 5a can be set to have shapes that are almost approximate to each other.

(Third Aspect)

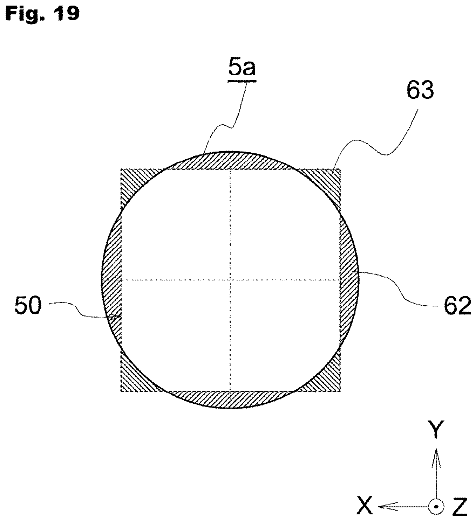

Fig. 19 is a view in which the light exit surface of the secondary light source 5a and the acceptable region 50 defined by the width of the virtual secondary light source VS2 are superimposed on each other in a case where the outer edge of the secondary light source 5a is assumed to be circular. In a case where the lens elements 6, 6, ... constituting the collimating optical system 5 are aligned in a shape close to a circle, the outer edge of the secondary light source 5a can be regarded as a circle. Furthermore, in a case where the lens elements 6, 6, ... constituting the collimating optical system 5 are arranged in a regular hexagonal shape, a square shape, or the like, there is a case where the lens elements 6, 6, ... can be regarded as the outer edge of the secondary light source 5a by a circumscribed circle in contact with the outer periphery of the lens elements 6, 6, ....

In a case where the acceptable region 50, that is, the region defined by the width of the virtual secondary light source VS2 is assumed to be a square, and the outer edge of the secondary light source 5a is assumed to be a circle, the condition for reducing the ratio of the difference between the area S2a of the unused region 62 and the area S2b of the unacceptable region 63 with respect to the area S1 of the acceptable region 50 can be calculated by numerical operation based on the plane geometry.

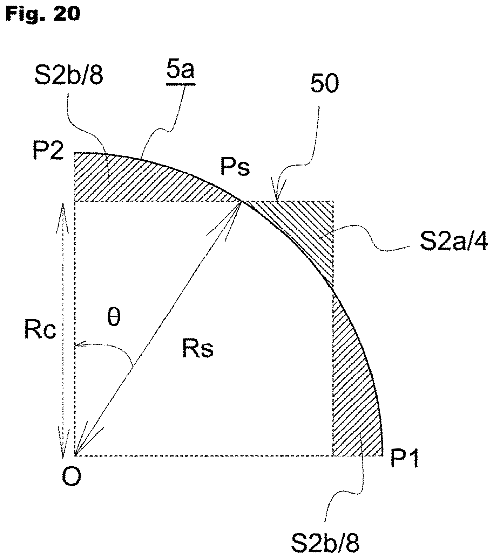

Fig. 20 is a view obtained by extracting an element corresponding to an upper right quarter portion of a figure illustrated in Fig. 19. Assuming that the area of the unused region 62 in Fig. 19 is S2a, the area of the region positioned on the inner side of the acceptable region 50 and the outer side of the outer edge of the secondary light source 5a in Fig. 20 is denoted as S2a/4. Similarly, assuming that the area of the unacceptable region 63 is S3a, each of the areas, which are illustrated at two locations in Fig 20, of the region positioned on the outer side of the acceptable region 50 and the inner side of the outer edge of the secondary light source 5a is denoted as S2b/8.

In Fig. 20, one end on an arc of a quarter-circle that is a part of the secondary light source 5a considered as circular, is denoted as P1, the other end is denoted as P2, and an intersection between the outer edge of the secondary light source 5a and the outer edge of the acceptable region 50 is denoted as Ps. It is assumed that the radius of the secondary light source 5a is Rs, the size of half of one side of the acceptable region 50 is Rc, and an angle formed by a line segment connecting the center O of the secondary light source 5a and the point Ps and a line segment connecting the center O of the secondary light source 5a and the point P2 is θ. At this time, by an arithmetic operation based on the plane geometry, the ratio of the area S2a of the unused region 62 to the area S1 of the acceptable region 50 and the ratio of the area S3a of the unacceptable region 63 to the area S1 of the acceptable region 50 are calculated by the following Formulas (2) and (3), respectively.

[Math 1]

$$\frac{S_{2a}}{S_1} = \theta \left(\frac{R_C}{R_S}\right)^2 - \tan\theta \qquad \cdots (2)$$

$$\frac{S_{3a}}{S_1} = \left(\frac{\pi}{4} - \theta\right)\left(\frac{R_C}{R_S}\right)^2 + \tan\theta - 1 \qquad \cdots (3)$$

Formula (4) is derived by modifying Formulas (2) and (3). In addition, by performing an arithmetic operation such as differentiation on the right side of Formula (4), Formula (5) is derived.

[Math 2]

$$(S_{2a} - S_{3a})/S_1 = \left(2\theta - \frac{\pi}{4}\right)\left(\frac{R_C}{R_S}\right)^2 - 2\tan\theta + 1 \qquad \cdots (4)$$

$$\min \frac{(S_{2a} - S_{3a})}{S_1} \fallingdotseq 0.17 \qquad \cdots (5)$$

From the above arithmetic operation results, the area S1 of the acceptable region, when the area S2a of the unused region, and the area S3a of the unacceptable region satisfy the following relationship

$$|S3a - S2a|/S1 \leq 0.17,$$

it can be regarded that a difference value between the area S1 of the acceptable region and the area S2a of the unused region is extremely small with respect to the occupied region of the secondary light source 5a, and the occupied region of the secondary light source 5a and the acceptable region 50 substantially coincide with each other. That is, in a case where the above relationship is satisfied, the width of the secondary light source 5a and the width of the virtual secondary light source VS2 substantially coincide with each other, and the acceptable region corresponding to the entire range of the effective acceptance angle of the fly-eye integrator 10 and the occupied region of the secondary light source 5a can be formed in a substantially similar shape.

[Another embodiment]

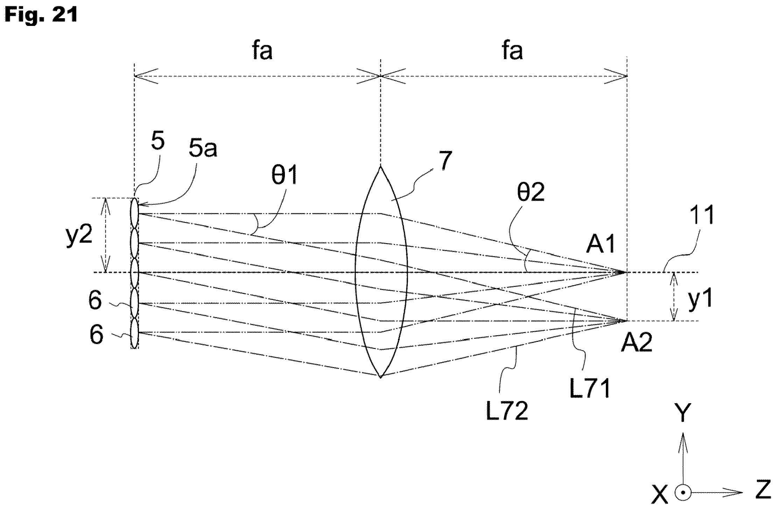

Hereinbelow, another embodiment is described.
<1> In the above embodiment, it has been described that the light exit surface of the collimating optical system 5 is disposed at the front focus position of the condensing optical system 7. However, the above discussion is also applicable to a case where the light exit surface of the collimating optical system 5 is disposed in a "vicinity range" of the front focus position of the condensing optical system 7. Hereinafter, the "vicinity range" is described with reference to Figs. 21 to 23.
Fig. 21 is a view schematically illustrating a traveling mode of light beams by extracting the collimating optical system 5 and the condensing optical system 7 from Fig. 2. Fig. 21 illustrates a case where the light exit surface 5a of the collimating optical system 5 is disposed at the front focus position of the condensing optical system 7.

Fig. 21 illustrates a light beam traveling in parallel to the optical axis 11 and a light beam traveling at an angle θ1 with respect to the optical axis 11 among a light beam group exiting from each lens element 6 included in the collimating optical system 5. In Fig. 21, the former light beam is indicated by a two-dot chain line, and the latter light beam is indicated by a one-dot chain line.

The light beam group traveling in parallel to the optical axis 11 and exiting from each lens element 6 included in the collimating optical system 5 is condensed at a point A1 on the optical axis 11. The point A1 is the position of the back focus of the condensing optical system 7. Meanwhile, the light beam group exiting from each lens element 6 included in the collimating optical system 5 at the angle θ1 with respect to the optical axis 11 is condensed at a point A2 separated from the optical axis 11. Note that, in the following description, among the light beams condensed at the point A2, a light beam positioned closest to the +γ side is referred to as a "light beam L71", and a light beam located closest to the -Y side is referred to as a "light beam L72" for convenience of description.

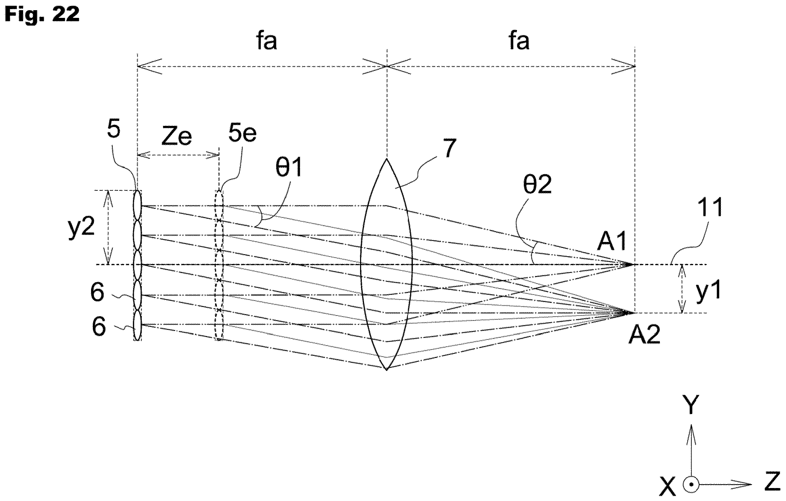

Fig. 22 is a view in which a traveling mode of the light beam when the collimating optical system 5 is moved in the direction of the optical axis 11 (Z direction) by a distance Ze from a state in Fig. 21 is superimposed on the traveling mode of the light beam in Fig. 21. Note that, in Fig. 22, the collimating optical system 5 disposed at a position shifted by the distance Ze from the position of the back focus of the condensing optical system 7 is referred to as a "collimating optical system 5e" in order to be distinguished from the state of Fig. 21.

As illustrated in Fig. 22, the light beam group exiting from each lens element 6 included in the collimating optical system 5e and traveling in parallel to the optical axis 11 is condensed at the point A1 on the optical axis 11, similarly to the light beam group traveling in parallel to the optical axis 11 and exiting from each lens element 6 included in the collimating optical system 5 illustrated in Fig. 21. In addition, as illustrated in Fig. 22, the light beam group exiting from each lens element 6 included in the collimating optical system 5e at the angle θ1 with respect to the optical axis 11 is condensed at a point A2 separated from the optical axis 11, similarly to the light beam group exiting from each lens element 6 included in the collimating optical system 5 at the angle θ1 with respect to the optical axis 11 illustrated in Fig. 21.

A light beam group that exits from the collimating optical system 5 disposed in the front focus of the condensing optical system 7 and travels while being inclined at the angle θ1 with respect to the optical axis 11 consists of a bundle of light beams included between the light beam L71 and the light beam L72. Here, it is assumed that the lens element of the fly-eye integrator 10 is arranged at the position of the point A2. When the range of the effective acceptance angle determined by the shape of the lens element of the fly-eye integrator 10 completely coincides with an incident angle range determined by the incident angle of the light beam L71 being incident on the lens element and the incident angle of the light beam L72 being incident on the lens element, the light exiting from the collimating optical system 5 is incident on the lens element arranged at the position of the point A2 without excess or deficiency.

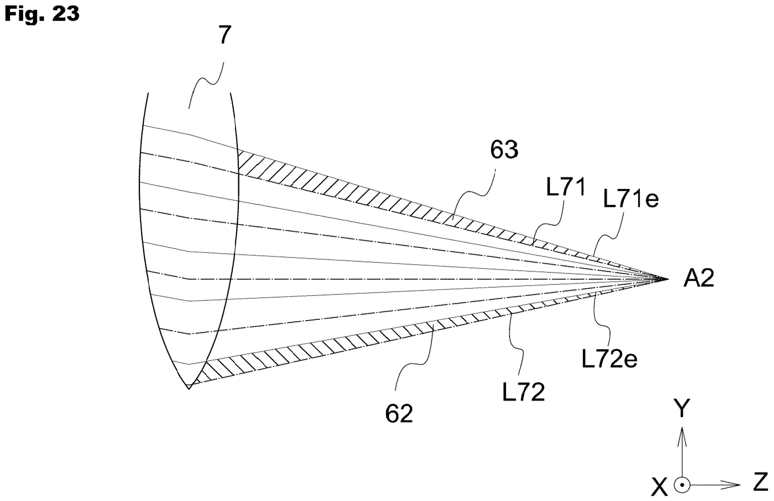

However, under such circumstances, as illustrated in Fig. 22, when the position of the collimating optical system 5 is disposed at a position shifted from the front focus of the condensing optical system 7 (in a case of the collimating optical system 5e), the range of the incident angle of the light beam group incident on the lens element of the fly-eye integrator 10 disposed at the position of the point A2 is determined by, as illustrated in Fig. 23, the incident angle of a light beam L71e being incident on the lens element and the incident angle of a light beam L72e being incident on the lens element.

At this time, in the region 63 sandwiched between the light beam L71 and the light beam L71e, the light beam traveling in the same region cannot be accepted into the lens element of the fly-eye integrator 10. That is, the region 63 corresponds to the "unacceptable region 63". Furthermore, the region 62 sandwiched between the light beam L72 and the light beam L72e is a region where the light beam can be accepted into the lens element of the fly-eye integrator 10 if the light beam is traveling in this region. That is, the region 62 corresponds to the "unused region 62".

If the position of the light exit surface of the collimating optical system 5 is excessively shifted from the front focus of the condensing optical system 7, one or both of the unused region 62 and the unacceptable region 63 increase, leading to a decrease in light utilization efficiency and a decrease in the amount of light accepted into the fly-eye integrator 10. Therefore, the collimating optical system 5 is preferably arranged in the vicinity of the front focus of the condensing optical system 7. However, the present invention is also in range regarding when the light exit surface of the collimating optical system 5 is disposed at a position separated from the vicinity of the front focus position of the condensing optical system 7.

In Fig. 21, assuming that the maximum effective acceptable angle of the fly-eye integrator 10 is θ2, the range of an amount of deviation of the acceptance angle is ±50% of θ2, preferably ±30% of θ2, and more preferably ±10% of θ2.

For example, in a case where the range of the amount of deviation of the allowable incident angle is set to ±50% of θ2, the allowable deviation width ±Ze of the collimating optical system 5 from the front focus of the condensing optical system 7 can be expressed as

$$\pm Ze = \pm(2 \times y2 \times 0.5)/\tan\theta1,$$

where an exit angle from the collimating optical system 5 is θ1 and the size of the collimating optical system 5 is 2 × y2 (see Fig. 21). In a case where the range of the amount of deviation of the allowable incident angle is set to ±10% of θ2, the amount of deviation can be expressed as follows.

$$\pm Ze = \pm(2 \times y2 \times 0.1)/\tan\theta1$$

That is, the absolute value |le| of the allowable deviation width from the front focus of the condensing optical system 7 is preferably $|Ze| < y2/\tan\theta1$, more preferably $|Ze| < 0.6 \cdot y2/\tan\theta1$, and particularly preferably $|le| < 0.2 \cdot y2/\tan\theta1$. In other words, in the present specification, a position shifted from the front focus of the condensing optical system 7 by the value of |Ze| defined under the above conditions is defined as the vicinity of the front focus of the condensing optical system 7.

Note that, assuming that the size of the fly-eye integrator 10 is 2 × y1 and the ideal focal length of the condensing optical system 7 is fa (see Fig. 21), the following expression is possible.

$$\tan\theta1 = y1/fa$$

As an example, a case where the maximum effective acceptance angle θ2 of the fly-eye integrator 10 is 10°, the half size y1 of the fly-eye integrator 10 is 50 mm, and the exit angle θ1 from the collimating optical system 5 is 5° is used.

From Fig. 21, because it is clear that $\tan\theta2 = y2/fa$, it can be calculated as follows.

$$y2 = y1 \cdot (\tan\theta2/\tan\theta1) \approx 101 \text{ mm}$$

$$\pm Ze = \pm(2 \times y2 \times 0.1)/\tan\theta1 \approx \pm232 \text{ mm}$$

$$fa = y2/\tan\theta2 = 574 \text{ mm}$$

In this example, the position of the light exit surface of the collimating optical system 5 may be set to the front focus of the condensing optical system 7 or at a position shifted in the positive direction or the negative direction by a distance within 232 mm from the front focus of the condensing optical system 7.

<2> In the above embodiment, the light incident surface 10a of the fly-eye integrator 10 is disposed at the back focus position of the condensing optical system 7. However, in the above discussion, the light incident surface 10a of the fly-eye integrator 10 may be at a position shifted from the back focus of the condensing optical system 7.

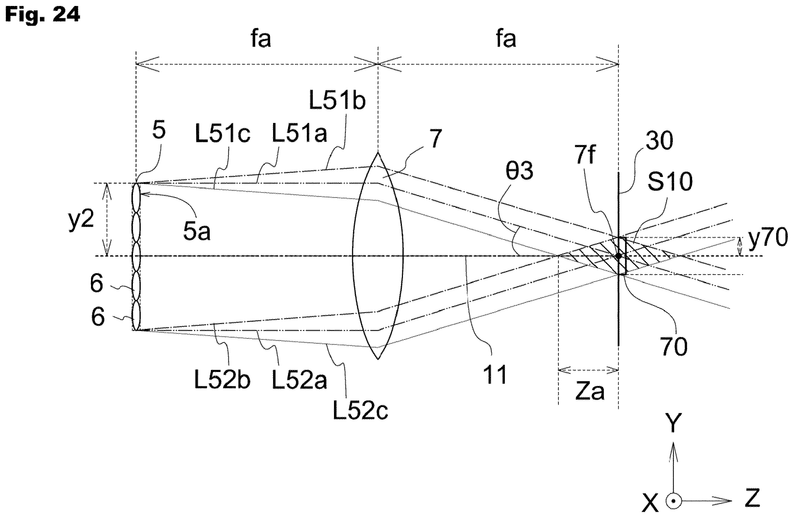

Fig. 24 is a view schematically illustrating a traveling mode of light beams by extracting the collimating optical system 5 and the condensing optical system 7 from Fig. 2. Note that Fig. 24 schematically illustrates an image 70 of the plurality of LEDs 3, 3, ... formed on a plane (plane 30) parallel to the X-Y plane including the back focus 7f of the condensing optical system 7.

Fig. 24 illustrates, as light beams included in a light beam bundle exiting from a location positioned farthest on the +γ side among the collimating optical system 5, a light beam L51a parallel to the optical axis 11, and a light beam L51b most diverging toward the +γ side with respect to the optical axis 11, and a light beam L51c most diverging toward the -Y side with respect to the optical axis 11. Similarly, Fig. 24 illustrates, as light beams included in a light beam bundle exiting from a location positioned farthest on the -Y side among the collimating optical system 5, a light beam L52a parallel to the optical axis 11, and a light beam L52b most diverging toward the +γ side with respect to the optical axis 11, and a light beam L52c most diverging toward the -Y side with respect to the optical axis 11.

A region S10 indicated by hatching in Fig. 24 is a region where an image 70 of the plurality of LEDs 3, 3, ... can be formed. In other words, in a case where the light incident surface 10a of the fly-eye integrator 10 is positioned in the region S10, the images 70 of the LEDs 3, 3, ... are formed on the light incident surface 10a of the fly-eye integrator 10. From such a viewpoint, the installation position of the fly-eye integrator 10 is preferably adjusted such that the light incident surface 10a of the fly-eye integrator 10 is positioned in the region S10.

As illustrated in Fig. 24, a distance in the Z direction between the back focus 7f of the condensing optical system 7 and the light incident surface 10a of the fly-eye integrator 10 is defined as Za, the ideal focal length of the condensing optical system 7 is defined as fa, the incident angle of the light exiting from the condensing optical system 7 and incident on the light incident surface 10a of the fly-eye integrator 10 is defined as θ3, the size of the collimating optical system 5 is defined as 2 × y2, and the length in the y direction of the image 70 of the LEDs 3, 3, ... formed on the plane 30 is defined as 2 × y70.

In this case, the following is established.

$$\tan\theta 3 = (2 \times y2)/(2 \times fa) = y2/fa,$$

and

$$\tan\theta 3 = (2 \times y70)/(2 \times Za) = y70/Za.$$

Thus, according to the formula transformation, the following is obtained.

$$Za = fa \times \{(2 \times y2)/(2 \times y70)\}$$

As described above, with respect to the Z direction (direction parallel to the optical axis 11), the amount of deviation between the light incident surface 10a of the fly-eye integrator 10 and the back focus 7f is preferably within $\pm Za$, and more preferably within $\pm Za/2$. The value of Za described above is determined by the ideal focal length fa of the condensing optical system 7, the size (2 × y2) of the collimating optical system 5, and the size (2 × y70) of the image 70 of the LEDs 3, 3, ... formed on the plane 30. The value of the size of the image 70 of each of the LEDs 3, 3, ... is obtained by, for example, actually installing a screen on the plane (plane 30) parallel to the X-Y plane including the back focus 7f and detecting the size of the image 70 displayed on the screen.

<3> Whether the range of the incident angle of light exiting from the secondary light source 5a and incident on the light incident surface 10a of the fly-eye integrator 10 can be made substantially coincide with the entire range of the effective acceptance angle of the fly-eye integrator 10 can be verified using an imaging device. Specifically, in Fig. 2, an imaging device with a pinhole is installed at the position of the light incident surface 10a of the fly-eye integrator 10. Then, a projection surface is installed at a position advanced from the incident surface of the imaging device by the length in the direction of the optical axis 11 of the fly-eye integrator 10. An image of the secondary light source 5a (see Figs. 1, 8, etc.), that is, an image of the collimating optical system 5 is projected on the projection surface.

Assuming that the size of the image projected on the projection surface is b1 and the length of the fly-eye integrator 10 in the direction of the optical axis 11 is b2, the incident angle $\theta\beta$ corresponding to the outer edge of the projected image is obtained by the following.

$$\theta\beta = \tan^{-1}(b1/b2)$$

The verification can be performed by comparing the angle $\theta\beta$ with the maximum effective acceptance angle $\theta L$ of the fly-eye integrator 10.

## Claims

1. A light source device (1) comprising:

   a plurality of light-emitting diodes (LEDs) (3);
   a collimating optical system (5) that is disposed corresponding to the plurality of LEDs (3) and into which light exiting from the plurality of LEDs (3) is incident;
   a condensing optical system (7) that condenses light exiting from the collimating optical system (5); and
   a fly-eye integrator (10) into which light exiting from the condensing optical system (7) is incident,
   wherein assuming that a virtual primary light source (VS1) is disposed at a back focus (7f) position of the condensing optical system (7), and parallel light is defined as a virtual secondary light source (VS2), the parallel light being obtained from light traveling from the virtual primary light source (VS1) toward the condensing optical system (7) with a maximum effective acceptance angle ($\theta L$) of the fly-eye integrator (10) as a divergence angle and then passing through the condensing optical system (7), the virtual secondary light source (VS2) has a width that substantially coincides with a width of a secondary light source determined according to a shape of a light exit surface (5a) of the collimating optical system (5).

2. The light source device (1) according to claim 1, wherein

in a case where an inner side of a convex polygon or a closed curved surface formed by virtually connecting an outer edge of the light exit surface (5a) of the collimating optical system (5) with a straight line or an envelope is set as a secondary light source, and the virtual secondary light source (VS2) is set at a position of the light exit surface (5a) of the collimating optical system (5),

assuming that a length of a line segment that passes through a center of the virtual secondary light source (VS2) from a first point (P1) on an outer edge of the virtual secondary light source (VS2) and reaches a second point (P2) different from the first point (P1) on the outer edge of the virtual secondary light source (VS2) is defined as D,

an outer edge of the secondary light source is positioned between a first reference boundary (51) offset by 0.1D from the outer edge of the virtual secondary light source (VS2) toward a side approaching the center and a second reference boundary (52) offset by 0.1D from the outer edge of the virtual secondary light source (VS2) toward a side separating from the center.

3. The light source device (1) according to claim 1, wherein

in a case where the light exit surface of the collimating optical system (5) is a secondary light source, and the virtual secondary light source (VS2) is set at a position of the light exit surface of the collimating optical system (5), the light source device (1) satisfies

$$0 < S3b/S1 < 0.4 \text{ and } 0 < S2b/S1 < 0.4$$

where:

S1 is an area of an acceptable region (50) that is an occupied region of the virtual secondary light source (VS2);

S2b is an area of an unused region (62) that is a region sandwiched between an outer edge of the secondary light source and an outer edge of the virtual secondary light source (VS2) on an inner side of the outer edge of the virtual secondary light source (VS2) when the virtual secondary light source (VS2) is projected onto the secondary light source; and

S3b is an area of an unacceptable region (63) that is a region sandwiched between the outer edge of the secondary light source and the outer edge of the virtual secondary light source (VS2) on an outer side of the outer edge of the virtual secondary light source (VS2) when the virtual secondary light source (VS2) is projected onto the secondary light source.

4. The light source device (1) according to claim 1, wherein

in a case where an inner side of a circumscribed circle of the light exit surface of the collimating optical system (5) is a secondary light source, and the virtual secondary light source (VS2) is set at a position of the light exit surface of the collimating optical system (5), the light source device (1) satisfies

$$|S3a - S2a|/S1 \leq 0.17,$$

where:

S1 is an area of an acceptable region (50) that is an occupied region of the virtual secondary light source (VS2);

S2a is an area of an unused region (62) that is a region sandwiched between an outer edge of the secondary light source and an outer edge of the virtual secondary light source (VS2) on an inner side of the outer edge of the virtual secondary light source (VS2) when the virtual secondary light source (VS2) is projected onto the secondary light source; and

S3a is an area of an unacceptable region (63) that is a region sandwiched between the outer edge of the secondary light source and the outer edge of the virtual secondary light source (VS2) on the outer side of the outer edge of the virtual secondary light source (VS2) when the virtual secondary light source (VS2) is projected onto the secondary light source.

**5.** The light source device (1) according to any one of claims 1 to 4, wherein the light exit surface of the collimating optical system (5) is disposed in a vicinity range of a front focus position of the condensing optical system (7).

**6.** The light source device (1) according to any one of claims 1 to 3, wherein the fly-eye integrator (10) includes a plurality of lens elements (21) having a quadrangular shape or a hexagonal shape.

Fig. 1

11

VS1

7f

fa

θL

7

r

VS2

VS2

5a

ws2

5

6

6

**Fig. 2**

EP 4 394 499 A1

Fig. 3

**Fig. 4**

EP 4 394 499 A1

Fig. 5

Fig. 6

**Fig. 7**

**Fig. 8**

41

6    6

5a

**Fig. 9**

Y

X ← ⊙ Z

41

Wx

Wn

5a

Fig. 10

EP 4 394 499 A1

Fig. 11

10

21

Lb

θb

θL

**Fig. 12**

**Fig. 13**

**Fig. 14**

**Fig. 15**

**Fig. 16**

**Fig. 17**

Y

X ←——⊙ Z

50

6

5, 5a

**Fig. 18**

5, 5a

**Fig. 19**

**Fig. 20**

**Fig. 21**

EP 4 394 499 A1

**Fig. 22**

EP 4 394 499 A1

EP 4 394 499 A1

**Fig. 23**

7

63

L71

L71e

A2

L72e

L72

62

Y

X ⊙ → Z

**Fig. 24**

Europäisches
Patentamt

European
Patent Office

Office européen
des brevets

**EUROPEAN SEARCH REPORT**

Application Number

EP 23 21 8013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 200787 A (CERMA PREC INC) 1 December 2016 (2016-12-01) * the whole document * | 1-6 | INV. G03B21/20 G02B19/00 G02B3/00 |
| X | JP 6 651124 B2 (NIKON CORP) 19 February 2020 (2020-02-19) * the whole document * | 1-3,5,6 | G02B27/30 |
| X | WO 2017/043185 A1 (USHIO ELECTRIC INC [JP]) 16 March 2017 (2017-03-16) | 1 | |
| A | * the whole document * | 2-6 | |
| X | JP 2018 087929 A (USHIO ELECTRIC INC) 7 June 2018 (2018-06-07) | 1 | |
| A | * the whole document * | 2-6 | |
| X | US 10 845 010 B2 (USHIO ELECTRIC INC [JP]) 24 November 2020 (2020-11-24) | 1 | |
| A | * the whole document * | 2-6 | |
| A | WO 2018/225774 A1 (USHIO ELECTRIC INC [JP]) 13 December 2018 (2018-12-13) * the whole document * | 1-6 | TECHNICAL FIELDS SEARCHED (IPC) G02B G03B |
| A | WO 2013/187299 A1 (USHIO ELECTRIC INC [JP]) 19 December 2013 (2013-12-19) * the whole document * | 1-6 | |

The present search report has been drawn up for all claims

| Place of search | Date of completion of the search | Examiner |
|---|---|---|
| Munich | 8 May 2024 | Albayrak, Charlotte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 8013

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2024

| Patent document cited in search report | Publication date | Patent family member(s) | Publication date |
|---|---|---|---|
| JP 2016200787 A | 01-12-2016 | JP 6529809 B2<br>JP 2016200787 A | 12-06-2019<br>01-12-2016 |
| JP 6651124 B2 | 19-02-2020 | JP 6651124 B2<br>JP 2016188878 A | 19-02-2020<br>04-11-2016 |
| WO 2017043185 A1 | 16-03-2017 | CN 108027115 A<br>JP 6172540 B2<br>JP 2017054724 A<br>WO 2017043185 A1 | 11-05-2018<br>02-08-2017<br>16-03-2017<br>16-03-2017 |
| JP 2018087929 A | 07-06-2018 | JP 6970369 B2<br>JP 2018087929 A | 24-11-2021<br>07-06-2018 |
| US 10845010 B2 | 24-11-2020 | CN 108368978 A<br>JP 6866565 B2<br>JP 2017130363 A<br>KR 20180096720 A<br>US 2019032869 A1<br>WO 2017126500 A1 | 03-08-2018<br>28-04-2021<br>27-07-2017<br>29-08-2018<br>31-01-2019<br>27-07-2017 |
| WO 2018225774 A1 | 13-12-2018 | JP 7025683 B2<br>JP 2018205635 A<br>TW 201903318 A<br>WO 2018225774 A1 | 25-02-2022<br>27-12-2018<br>16-01-2019<br>13-12-2018 |
| WO 2013187299 A1 | 19-12-2013 | JP 2014003086 A<br>WO 2013187299 A1 | 09-01-2014<br>19-12-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014003086 A